# EUROPEAN PATENT SPECIFICATION

(11) **EP 2 072 566 B1**
(45) Date of publication and mention of the grant of the patent: **04.08.2010**
(21) Application number: 07025038.6
(22) Date of filing: 21.12.2007
(51) Int. Cl.: C08K 3/02, C08K 3/04, C08K 3/34

(54) **Reduction of phosphine relaease in plastic articles comprising red phosphorus**
Reduzierung der Phosphinfreisetzung in Kunststoffartikeln mit rotem Phosphor
Réduction de la libération de phosphine dans des articles en plastique comprenant du phosphore amorphe

(43) Date of publication of application: 24.06.2009
(73) Proprietor: Borealis Technology OY, 06101 Porvoo (FI)
(72) Inventor: Ruemer, Franz, 4222 St. Georgen/gusen (AT); Hagstrand, Per-Ola, 44446 Stenungsund (SE)
(74) Representative: Kador & Partner

(56) References cited:
- EP-A- 0 001 589
- DE-A1- 2 308 104

## Description

The present invention provides a polymer composition for the production of plastic articles with reduced release of phosphines.

Polymers are frequently used in applications where flame resistance of the materials is required. However, in general, polymers are inherently combustible materials. Therefore, in order to obtain polymers with improved flame resistance, specific additives are incorporated into the polymer, such as halogen based chemicals, phosphate based chemicals or inorganic hydroxide/hydrated compounds. In particular, red phosphorus is used due to its extremely effective flame retardant effect in plastic materials.

On the other hand, considerable risks are involved in handling red phosphorus, especially when working it into plastic moulding compounds at elevated temperatures. Red phosphorus forms highly toxic phosphines by the action of atmospheric oxygen and humidity, particular at temperatures up to and above 300 °C, which are typical for processing industrial plastic. Apart from their toxicity, phosphines are extremely critical owing to their self-ignition potential, and there is an additional hazard of self-ignition of the red phosphorus itself.

Therefore, in the past many attempts have been made to improve the handling properties of red phosphorus when it is worked into plastic moulded articles and thus to make the process safer. In general, red phosphorus is encapsulated in an epoxy resin to avoid release of phosphines. However, caused by shearing and high temperature, this encapsulation can break and phosphine gas(es) may evaporate.

Furthermore, it is also well known that in the production of polymer articles using so-called masterbatches, the additive level in such masterbatches is very high (50 to 60 wt%), and thus the phosphine release is too high during extrusion or injection moulding processing of a polymer composition comprising generally 7 to 8 wt% of said masterbatch.

One idea to solve these problems was to degas the final composition pellets at high temperature and/or vacuum. However, this solution is expensive because for this method the compounding equipment must be modified.

Therefore, object of the present invention was to provide a polymer composition including red phosphorus which can be used for the production of polymer articles, wherein the phosphine release is very low, and which, however, at the same time maintains the good flame retardant properties due to the presence of red phosphorus. Furthermore, the production of such polyolefin articles should be inexpensive.

The present invention is based on the finding that the above-mentioned objects can be achieved by incorporating a specific adsorber into the polymer composition together with red phosphorus.

The invention thus provides a polymer composition comprising
a) red phosphorus in an amount of 0.01 to 10 wt%, based on the total polymer composition, and
b) zeolite-type material as adsorber in an amount of 0.05 to 6 wt %,
wherein the phosphine release of the polymer composition is less than 1 ppm, and wherein the adsorber contains pores with a pore size of at least 0.7nm.

The phosphine release of the polymer composition is measured with a method described below using a handheld PAKIII (Dräger) measuring device.

The composition of the invention simultaneously shows low phosphine release levels and maintains the flame resistance of the polymer article.

In the present invention the polymer composition shows a phosphine release of less than 1 ppm, preferably of less than 0.5 ppm, more preferably of less than 0.3 ppm, and most preferably of less than 0.2 ppm.

Furthermore, in the inventive polymer composition red phosphorus is used in an amount of 0.01 to 10 wt%, preferably of 0.5 to 8 wt%, and more preferably of 1.0 to 6 wt%, based on the total polymer composition.

The term "red phosphorus" refers in this context to any coloured allotropic form of phosphorus in finely divided form, e.g. to red, violet or black phosphorus, however, not to white phosphorus.

Red phosphorus may be added to the polymer composition in the form of a masterbatch. The masterbatch comprises preferably 40 to 70 wt% of red phosphorus, more preferably 45 to 65 wt%, and most preferably 50 to 60 wt%, based on the total masterbatch. For example, such masterbatches which may be used in the present invention are MASTERET^{®} from Italmatch Chemicals or EXOLIT^{®} from Clariant.

The term "adsorber" means a substance which is able to accumulate on or in itself other substances like liquids or gas.

Adsorption, similar to surface tension, is a consequence of surface energy. In the bulk material, all the bounding requirements - be they ionic, covalent or metallic - of the constituent atoms of a material are fulfilled. However, atoms on the surface experience a bond deficit, because they are not wholly surrounded by other atoms. It is then energetically favourable for these "dangling bonds" to react with whatever happens to be available. The exact nature of the bonding depends on the details of the species involved, but the adsorbed material is generally classed as experimenting physical adsorption or chemical adsorption.

The adsorption capacity of an adsorber depends inter alia on its (inner) surface area which can be measured e.g. by the adsorption of nitrogen. Furthermore, an adsorber usually has a microporous structure, and the adsorption capacity also depends on the nature of said micro-porous structure, e.g. on the diameter(s) of its pores. Microporous materials are often also designated as "molecular sieves".

Substances commonly used as adsorbers are, for example, amorphous silica in different modifications such as precipitated silica, synthetic or natural zeolites, or activated carbons.

The adsorber used in the present invention may be a single compound or a mixture of different compounds.

The adsorber is present in the composition in an amount of 0.05 to 6 wt.%, preferably of 0.1 to 5 wt.%, more preferably from 0.2 to 4 wt. %, and most preferably from 0.6 to 3 wt.%.

In the polymer composition of the invention preferably the weight ratio between red phosphorus and the adsorber is from 50:1 1 to 1:2, more preferably from 20:1 to 1:1, still more preferably from 10:1 to 1.2:1 and most preferably from 5:1 1 to 1.5:1.

It is preferred that the adsorber has a BET surface value of at least 100 m²/g, more preferably of at least 300 m²/g, still more preferably of at least 500 m²/g, and most preferably of at least 700 m²/g, measured according to ASTM D3037-89.

The preferred range of the BET surface value of the adsorber is from 100 to 2000 mg/g, measured according to ASTM D3037-89.

Furthermore, the adsorber contains pores with a pore size of at least 0.7 nm, preferably at least 0.8 nm and preferably at least 0.9 nm. The size of a pore is defined to be the smallest dimension of said pore.

In the composition of the invention, the adsorber is selected from the group of zeolite-type materials.

The term "zeolite-type material" embraces zeolites, zeosils, i.e. microporous materials based entirely on Si02, and zeotype materials, i.e. microporous materials with a similar structure as zeolites but different chemical composition.

In the composition of the invention, it is more preferred that the adsorber is selected from the group of zeolites.

In one preferred embodiment, as an adsorber a zeolite is used. More than 150 zeolite types have been synthesized and 48 naturally occurring zeolites are known. They are basically hydrated alumino-silicate minerals with an "open" structure that can accommodate a wide variety of positive ions, such as Na⁺, K⁺, Ca²⁺, Mg²⁺ and others. These positive ions are rather loosely held and can readily be exchanged for others in a contact solution. Some of the more common mineral zeolites are: analcime, chabazite, heulandite, natrolite, phillipsite, and stilbite.

As molecular sieves, zeolites show a very regular pore structure of molecular dimensions. The maximum size of the molecular or ionic species that can enter the pores of a zeolite is controlled by the diameters of the tunnel openings. These are conventionally defined by the ring size of the aperture, where, for example, the term "8 ring" refers to a closed loop that is built from 8 tetrahedrally coordinated silicon (or aluminium) atoms and 8 oxygen atoms. These rings are not always perfectly flat and symmetrical due to a variety of effects, including strain induced by the bonding between units that are needed to produce the overall structure, or coordination of some of the oxygen atoms of the rings to cations within the structure. Therefore, the pore openings for all rings of one size are not identical.

In the present application it is especially preferred to use the zeolite sold under the trade name SYLOSIV^{®} from Grace Davis GmbH as an adsorber. The particle size of the used adsorber is preferably from 0.01 to 100 micrometer, more preferably from 0.5 to 80 micrometer, and most preferably from 1 to 60 micrometer, measured according to EN21524.

It is also preferred in the present invention that the adsorber is added to the polymer composition during compounding of said composition in form of e.g. a powder. The composition can be either compounded to pellets or to the finished product. The mixture of the polymer and the adsorber during compounding leads to an unique dispersion of the adsorber in the molten polymer material.

The polymer composition of the present invention is preferably a thermoplastic polymer composition, such as a composition of homo- or copolymers of olefins e.g. propylene, ethylene etc., or a composition of polyamides, polyesters, mixtures thereof and the like.

More preferably the polymer composition of the invention comprises a polyolefin, e.g., a propylene or ethylene homo- or copolymer and the like.

The polymer composition of the present invention may also comprise further fillers, such as talc, calcium carbonate, mica, glass fibers etc. known in the art. The total amount of such fillers preferably is from 0.01 to 30 wt %, based on the total polymer composition.

The articles of the present invention are preferably pipes, fittings or cables.

The present invention furthermore relates to the use of zeolites and/or activated carbons as phosphines adsorbing agent in a polymer composition comprising red phosphorus in an amount of 0.01 to 10 wt%, based on the total polymer composition.

### Methods and Examples

### 1. Methods

### a) Measurement of the Phosphine Release

After compounding of the composition to be tested, pellets of the compounded composition in an amount of 1 kg were packed into a closed aluminium-layer bag. The aluminium layer bag was made of a multilayer film, polyethylene - aluminium - polyethylene, impenetrable for gases. The bag was formed of two 20 x 30 cm big sheets of the multilayer film which were welded together to form the bag.

After one week, a handheld PAKIII (Dräger) measuring device with a dust filter was quickly inserted into the bag which then was closed again. Then, after one minute, the phosphine concentration was measured.

After completion of the measurement, the measuring device was removed and the bag was closed again. After one day, the measurement procedure was repeated to confirm the obtained values.

The maximum detection limit was 20 ppm. The results are shown in Table 1.

### b) Iodine number

The iodine number was determined according to ASTM D 19597-97

### c) BET surface value

The BET surface value was determined according ASTM D3037-89

### d) Particle size

The particle size was determined according to EN21524.

### 2. Examples

### a) Polymer

As polymer, a propylene block copolymer composition having an MFR₂ (230°C/2.16 kg) measured according to ISO 1133 of 1.30 g/10 min was used. Furthermore, all tested compositions comprised 0.8 wt.% of carbon black.

### b) Adsorbers

As adsorbers were used:
ABSCENT 2500, which is commercial available from UOP;
SYLOBLOC^{®} S500, which is commercial available from Grace Davis GmbH,
SYLOSIV^{®} A3 and A10, which are commercial available from Grace Davison GmbH;
AEORSIL^{®} A 300 and A380, which are commercially available from Degussa AG;
ORGANOSORB^{®} 200-1, which is commercially available from DESOTEC;
PULSORB^{®} BL which is commercial available from Chemviron Carbon; and
NORIT^{®} SX1G, which is commercial available from Norit Nederland B.V.

### c) Red Phosphorus

Red phosphorus were used in form of a masterbatch. The used masterbatches was EXOLIT^{®} RP692 which is commercial available from Clariant, and contains red phosphorus in an amount of 50 wt.%.

All tested compositions contained 7 wt%, based on the total composition, of Exolit RP 692, i.e. 3.5 wt.% of red phosphorus.

Example 11 shows the phosphine release of the composition without using an adsorber.

In the examples the adsorbers and red phosphorus were added to the polymer raw material during compounding in an extruder or corresponding compounding device to obtain pellets.

**Table 1: Test results**

| **Example** | **Adsorber** | | **amount [wt%]** | **Iodine number [mg/g]** | **BET surface value [m²/g]** | **Particle size [micro meter]** | **Phosphine release [ppm]** | **Pore size [nm]** |
|---|---|---|---|---|---|---|---|---|
| | **Trade name** | **Type** | | | | | | |
| 1 (comp.) | Absent 2500 | zeolite | 0.15 | | | 5 | > 20 | 0.62 |
| 2 (comp.) | Sylosiv A3 | zeolite | 0.75 | | 800 | 6 to 9 | > 20 | 0.3 |
| 3 (comp.) | Sylobloc | amorphous silica | 0.25 | | | 4.6 to 5.6 | > 20 | |
| 4 (comp.) | Aerosil A300 | amorphous silica | 0.5 | | 300 | 0.007 | 1.4 | |
| 5 (comp.) | Aerosil A380 | amorphous silica | 0.5 | | 380 | 0.007 | > 20 | |
| 6 | Sylosiv A10 | zeolite | 0.75 | | 800 | 6 to 9 | 0.08 | 1.0 |
| 7 (comp.) | Organosorb 200-1 | activated carbon | 1.0 | > 900 | > 920 | <7.5 | 0.4 | |
| 8 (comp.) | Organosorb 200-1 | activated carbon | 2.0 | > 900 | > 920 | < 7.5 | 0.17 | |
| 9 (comp.) | Pulsorb BL | activated carbon | 0.75 | 1000 | | 4.5 | 0.37 | |
| 10 (comp.) | Norit SXIG | activated carbon | 0.75 | 900 | 1000 | 5 to 90 | 0.34 | |
| 11 (Exolit RP692, comp.) | - | - | - | - | - | - | > 20 | |

## Claims

1. A polymer composition comprising
a) red phosphorus in an amount of 0.01 to 10 wt%, based on the total polymer composition, and
b) zeolite-type material as adsorber in an amount of 0.05 to 6 wt%,
wherein the phosphine release of the polymer composition is less than 1 ppm, and wherein the adsorber contains pores with a pore size of at least 0.7 nm.

2. Polymer composition according to claim 1 wherein the weight ratio between red phosphorus and the adsorber is from 50:1 to 1:2.

3. Polymer composition according to any of the preceding claims wherein the adsorber has a BET surface value of at least 100 m²/g measured according to ASTM D3037-89.

4. Polymer composition according to claim 3, wherein the zeolite type material is a molecular sieve.

5. Polymer composition according to any of the preceding claims, wherein the adsorber has a particle size of 0.01 to 100 micrometer measured according to EN 21524.

6. Polymer composition according to any of the preceding claims, wherein the polymer composition comprises a thermoplastic polymer.

7. Use of a polymer composition according to any of claims 1 to 6 for the production of a polymer article.

8. Article comprising the polymer composition of any of claims 1 to 6.

9. Use of a zeolite type material in an amount of 0.05 to 6 wt% as phosphines adsorbing agent in a polymer composition comprising red phosphorus in an amount of 0.01 to 10 wt%.

## Patentansprüche

1. Polymerzusammensetzung, umfassend:
a) roten Phosphor in einer Menge von 0,01 bis 10 Gew.-%, und zwar auf die gesamte Polymerzusammensetzung bezogen, und
b) ein Material vom Zeolith-Typ als Adsorptionsmittel in einer Menge von 0,05 bis 6 Gew.-%,
wobei die Phosphinfreisetzung der Polymerzusammensetzung weniger als 1 ppm beträgt und wobei das Adsorptionsmittel Poren mit einer Porengröße von mindestens 0,7 nm enthält.

2. Polymerzusammensetzung nach Anspruch 1, wobei das Gewichtsverhältnis zwischen dem roten Phosphor und dem Adsorptionsmittel 50:1 bis 1:2 beträgt.

3. Polymerzusammensetzung nach einem der vorstehenden Ansprüche, wobei das Adsorptionsmittel einen BET-Wert der Oberfläche von mindestens 100 m²/g aufweist, und zwar gemäß ASTM D3037-89 gemessen.

4. Polymerzusammensetzung nach Anspruch 3, wobei das Material vom Zeolith-Typ ein Molekularsieb ist.

5. Polymerzusammensetzung nach einem der vorstehenden Ansprüche, wobei das Adsorptionsmittel eine Partikelgröße von 0,01 bis 100 µm aufweist, und zwar gemäß EN 21524 gemessen.

6. Polymerzusammensetzung nach einem der vorstehenden Ansprüche, wobei die Polymerzusammensetzung ein thermoplastisches Polymer umfaßt.

7. Verwendung einer Polymerzusammensetzung nach einem der Ansprüche 1 bis 6 für die Herstellung eines Polymergegenstandes.

8. Gegenstand, der die Polymerzusammensetzung nach einem Ansprüche 1 bis 6 umfaßt.

9. Verwendung eines Materials vom Zeolith-Typ in einer Menge von 0,05 bis 6 Gew.-% als Phosphine adsorbierendes Mittel in einer Polymerzusammensetzung, die roten Phosphor in einer Menge von 0,01 bis 10 Gew.-% umfaßt.

## Revendications

1. Composition polymère comprenant :
a) du phosphore rouge en quantité de 0,01 à 10 % en poids sur la base de la composition polymère totale, et
b) un matériau de type zéolithe comme agent adsorbant en quantité de 0,05 à 6 % en poids,
dans laquelle la libération d'hydrogène phosphoré de la composition polymère est inférieure à 1 ppm, et dans laquelle l'agent adsorbant contient des pores ayant une taille de pore d'au moins 0,7 nm.

2. Composition polymère selon la revendication 1, dans laquelle le rapport pondéral entre le phosphore rouge et l'agent adsorbant est de 50:1 à 1:2.

3. Composition polymère selon l'une quelconque des revendications précédentes, dans laquelle l'agent adsorbant présente une valeur de surface BET d'au moins 100 m²/g mesurée selon la norme ASTM D3037-89.

4. Composition polymère selon la revendication 3, dans laquelle le matériau de type zéolithe est un tamis moléculaire.

5. Composition polymère selon l'une quelconque des revendications précédentes, dans laquelle l'agent adsorbant présente une taille de particules de 0,01 à 100 micromètres, mesurée selon la norme EN 21524.

6. Composition polymère selon l'une quelconque des revendications précédentes, dans laquelle la composition polymère comprend un polymère thermoplastique.

7. Utilisation d'une composition polymère selon l'une quelconque des revendications 1 à 6, pour la production d'un article polymère.

8. Article comprenant la composition polymère selon l'une quelconque des revendications 1 à 6.

9. Utilisation d'un matériau de type zéolithe en quantité de 0,05 à 6 % en poids comme agents adsorbant les phosphines dans une composition polymère comprenant du phosphore rouge en quantité de 0,01 à 10 % en poids.
